# EUROPEAN PATENT APPLICATION

(11) **EP 1 985 895 A2**
(43) Date of publication of application: **29.10.2008**
(21) Application number: 08155149.1
(22) Date of filing: 25.04.2008
(51) Int. Cl.: F16J 9/28

(54) **Piston ring and a fluid sucking/discharge device with the piston ring**

(30) Priority: 26.04.2007 JP 2007117027
(71) Applicant: Anest Iwata Corporation, Yokohama-shi, Kanagawa (JP)
(72) Inventor: Fujioka, Tamotsu, Yokohama-shi Kanagawa (JP)
(74) Representative: Brouwer, Hendrik Rogier

(57) **Abstract**

A piston ring (21) is made of high polymers and fits in a circumferential groove (20) of a piston (19) in a cylinder (3) of a compressor or a vacuum pump. A plurality of cuts (22,23) are formed in the piston ring (21). When the piston ring (21) is turned inside up or pulled out radially, it is stretched out. The piston ring (21) can easily be fitted in the circumferential groove (20) of the piston (19) to prevent a fluid from leaking through between the piston (19) and the cylinder (3) with sufficient sealing capability.

## Description

### BACKGROUND OF THE INVENTION

The present invention relates to a piston ring and a fluid sucking/discharge device with the piston ring and in particular relates to a piston ring that fits on a piston that reciprocates in a cylinder.

Conventional fluid sucking/discharge devices include compressors and vacuum pumps. Compressors include oil-supply reciprocating compressors and oilless reciprocating compressors.

An oil-supply reciprocating compressor comprises a piston in which a piston ring fits in a circumferential groove, the piston reciprocating in a cylinder with a crankshaft in a crankcase thereby compressing a gas in a compression chamber between a top wall of the cylinder and an upper surface of the piston, the crankcase and the compression chamber being sealed with oil membrane of a lubricating oil supplied in the crankcase.

JP8-9985B2 discloses an oilless reciprocating compressor including a piston ring mainly made of polymers such as PTFE or polytetrafluoroethylene resin. The ring cannot elastically be enlarged as a rubber band or cannot easily fit in a circumferential groove of the piston. So a C-like piston ring which has an end gap is used.

In the oilless reciprocating compressor, to prevent a gas from leaking from a compression chamber to a crankcase, the end gap of the piston ring is modified in shape as disclosed in JP60-26236Y2.

However, a gas is liable to leak through the end gap during a compression step where the gas is compressed by the piston, making it more difficult to exhibit sealing enough. Especially, if sealing is not sufficient in a vacuum pump, suitable vacuum state cannot be produced therein.

### SUMMARY OF THE INVENTION:

In view of the disadvantages in the prior art, it is an object of the invention to provide a piston ring preventing fluid from leaking, sufficient sealing being achieved in an oilless reciprocating device or a vacuum pump, the piston ring being readily fitted on a piston.

It is another object of the invention to provide a fluid sucking/discharge device having the piston ring.

### BRIEF DESCRIPTION OF THE DRAWINGS:

The features and advantages of the invention will become more apparent from the following description with respect to embodiments as shown in accompanying drawings.
Fig. 1 is a vertical sectional view of a fluid sucking/discharge device having the first embodiment of a piston ring according to the present invention.
Fig. 2 is an enlarged vertical sectional view of the circle X in Fig. 1.
Fig. 3 is a perspective view of the first embodiment of a piston ring according to the present invention.
Fig. 4 is a perspective view of the piston ring in Fig. 3 which is turned inside up by 90 degrees to expand in diameter.
Figs. 5A-5D are enlarged vertical sectional views showing the steps of how to fit the piston ring in a circumferential groove of a piston.
Fig. 6 is a perspective view of the second embodiment of a piston ring according to the present invention.
Fig. 7 is a perspective view of the third embodiment of a piston ring according to the present invention.
Fig. 8 is a perspective view showing that the ring is expanded outward.

### DETAILED DESCRIPTION OF PREFERRED EMBODIMENTS:

In the embodiments of the present invention, an oilless reciprocating compressor will be described as fluid sucking/discharge device.

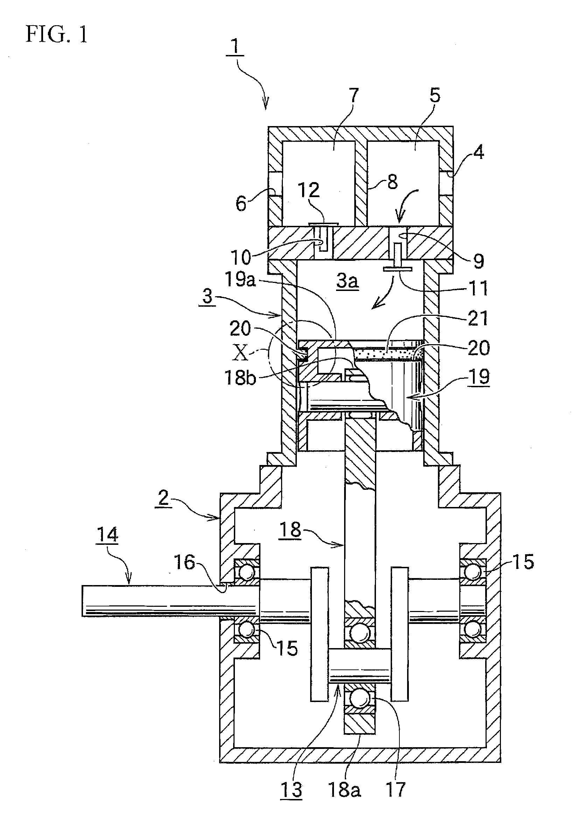

In Fig. 1, a compressor 1 comprises a sealed crankcase 2 and a cylinder 3 on the crankcase 2. At the top of the cylinder 3, a sucking chamber 5 having an inlet 4 and a discharge chamber 7 having an outlet 6 are provided with a partition wall 8.

The suction chamber 5 and the discharge chamber communicate with the cylinder 3 via a suction port 9 and a discharge port 10 respectively. The suction port 9 and the discharge port 10 have check valves 11,12 respectively.

In the crankcase 2, a drive shaft 14 integrally connected with a crankshaft 13 is rotatably mounted via bearings 15,15 and a seal 16.

The crankshaft 13 is rotatably mounted to one end 18a of a connecting rod 18 via a bearing 17.

A piston 19 is mounted to the other end 18b of the connecting rod 18 so as to move up and down. A compression chamber 3a is formed between a top wall of the cylinder 3 and a top surface 19a of the piston 19.

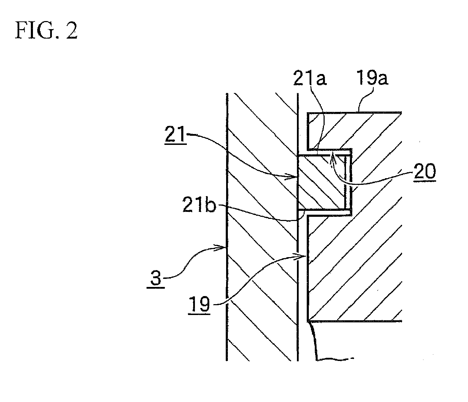

In Fig. 2, a circumferential groove 20 is formed in the outer circumferential surface of the piston 19. A piston ring 21 which fits in the circumferential groove 20 is in sliding contact with the inner circumferential wall of the cylinder 3.

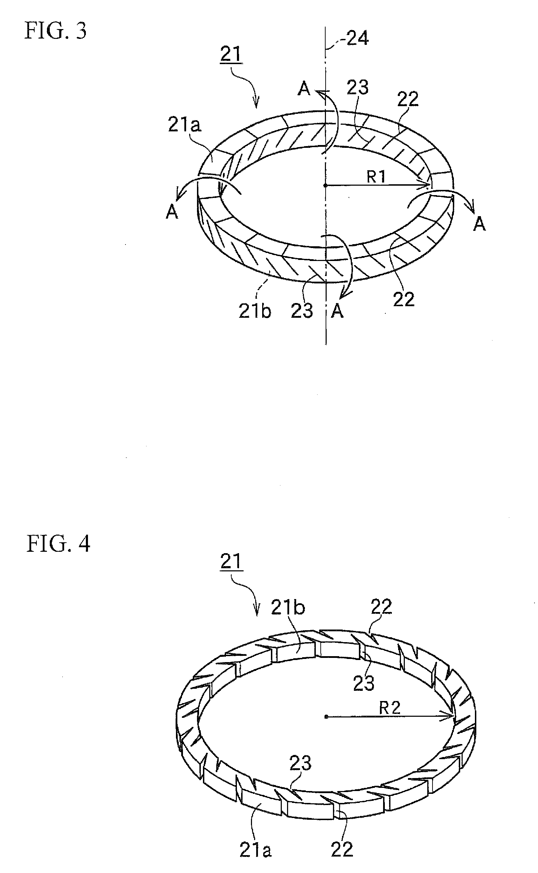

In Fig. 3, the piston ring 21 is made of high polymers such as PTFE fibers and has a rectangular cross-section. A plurality of first cuts 22 and a plurality of second cuts 23 are made in the upper surface 21 a and the lower surface 21b of the ring 21 alternately in a circumferential direction.

The first cuts 22 are made downward from the upper surface 21 a in parallel, while the second cuts 23 are made upward from the lower surface 21b in parallel.
The first cuts 22 and second cuts 23 are tilted with respect to a vertical axis 24 of the ring 21.

As shown by arrows A in Fig. 3, the ring 21 is turned inside up by 90 degrees such that the first cuts 22 in the upper surface 21a and second cuts 23 in the lower surface 21 bare changed to be in the outer and inner circumferential surfaces respectively in Fig. 4. The cuts 22,23 open outward to allow the ring 21 to expand such that a radius R2 after turning in Fig. 4 becomes longer than a radius Ri before turning in Fig. 3.

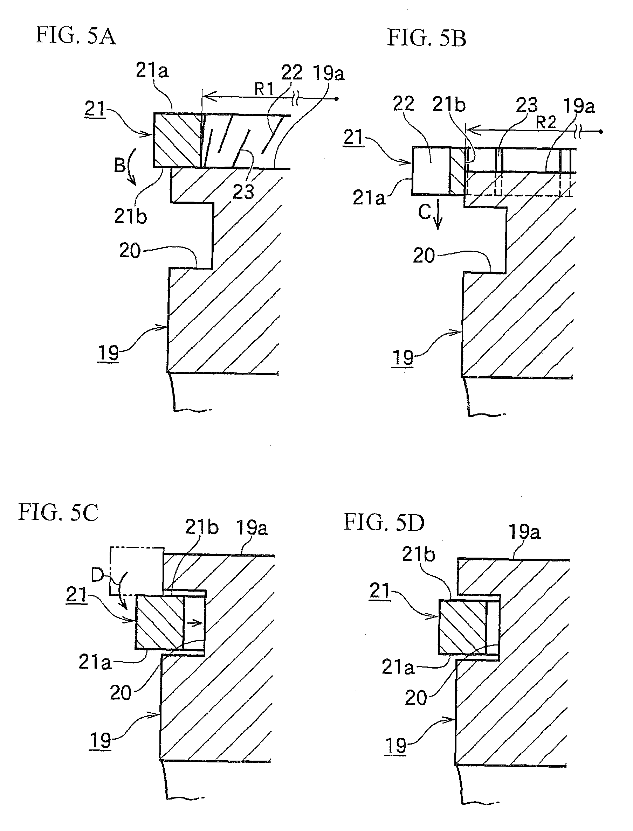

Figs. 5A-5D are enlarged vertical sectional views showing the steps of how to fit the piston ring 21 in the circumferential groove 20 of the piston 19.

In Fig. 5A, the piston ring 21 is put on the top surface 19a of the piston 19. Then, as shown by an arrow B in Fig. 5A, the ring 21 is turned inside up counterclockwise by 90 degrees such that the upper surface 21a and lower surface 21b change the outer and inner circumferential surfaces respectively in Fig. 5B. The cuts 22, 23 open outward. The piston ring 21 expands such that the radius R1 before turning in Fig. 5A gets longer to the radius R2 after turning, and fits on the outer circumferential surface of the piston 19. From this position, the piston ring 21 is lowered toward the circumferential groove 20 in the outer circumferential surface of the piston 19 as shown by an arrow C in Fig. 5B.

The ring 21 has a rectangular cross-section to allow the cut to be made easily and to make turning-up smoother.

As shown by an arrow D in Fig. 5C, the piston ring 21 is lowered close to the circumferential groove 20 and is turned down by 90 degrees counterclockwise. The ring 21 gets shorter to the radius R1 and fits in the circumferential groove 20 in Fig. 5D. With the reversal of the ring 21 by 180 degrees, the first cuts 22 in the upper surface 21 a before turning is positioned in the lower surface after turning, and the second cuts 23 in the lower surface 21b before turning is positioned in the upper surface after turning.

As another way, in order to fit the piston ring 21 on the outer circumferential surface of the piston 19, the piston ring 21 which is expanded by turning inside up counterclockwise by 90 degrees is directly fitted on the outer circumferential surface of the piston 19 as shown in Fig. 5B and lowered to the circumferential groove 20. Then, the ring 21 is turned down clockwise by 90 degrees, and the ring fits in the circumferential groove 20 such that the first cuts 22 are in the upper surface and the second cuts 23 are in the lower surface.

The cuts 22,23 are tilted with respect to the vertical axis 24 at the center of the ring 21, and the ring 21 is turned up by 90 degrees to allow the depths of the cuts 22,23 to increase. So, the circumferential widths of the cuts 22,23 are opened to allow the radius of the ring 21 to get longer.

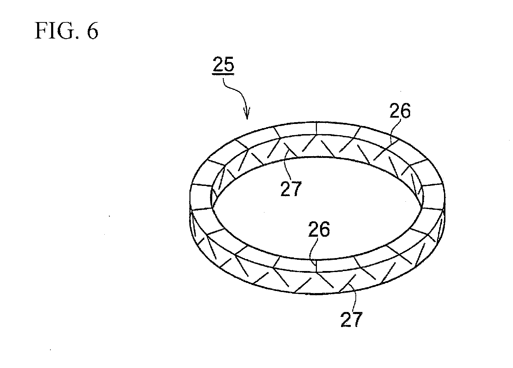

Fig. 6 shows the second embodiment of a piston ring according to the present invention.

In Fig. 6, in a piston ring 25 in the second embodiment, first cuts 26 and second cuts 27 are tilted reversely, not in the same direction in the first embodiment, thereby improving positional stability of the piston ring 25 during reciprocation of a piston.

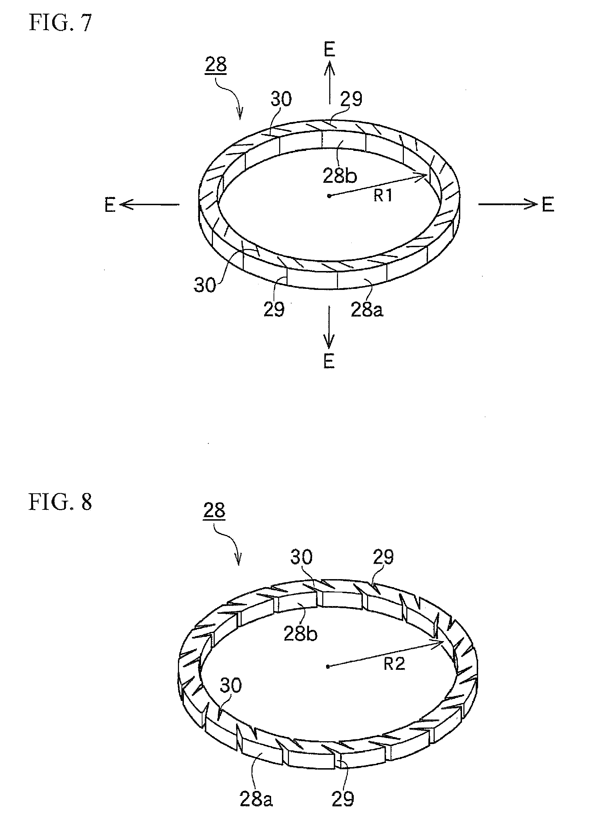

Fig. 7 is a perspective view of the third embodiment of a piston ring according to the present invention, and Fig. 8 is a perspective view of the expanded piston ring.

In Fig. 7, in the piston ring 28 in the third embodiment, first cuts 29 and second cuts 30 are alternately formed in the outer circumferential surface 28a and the inner circumferential surface 28b respectively such that they do not penetrate from one surface to the other surface.

The cuts 29, 30 are tilted with respect to a radius of the ring 28. As shown by arrows E in Fig. 7, the piston ring 28 is pulled out radially and the cuts 29,30 are opened circumferentially. So the radius R1 before pulling is stretched to the radius R2 after pulling in Fig. 8. R2 is longer than R1.

The cuts 29,20 extend vertically from the upper surface to the lower surface of the ring 28. The ring 28 fits on the piston in Fig. 1 to allow a compression chamber 3a of a compressor 1 to communicate with the inside of the crankcase. So a filler (not shown) such as adhesive is filled in the cuts 29,30 before fitting on the piston.
The foregoing merely relate to embodiments of the invention. Various changes and modifications may be made by a person skilled in the art without departing from the scope of claims wherein:

## Claims

1. A piston ring made of high polymers, an internal diameter of the piston ring being capable of increasing when the piston ring is turned.

2. A piston ring of claim 1 wherein a plurality of cuts are formed circumferentially in at least one of an upper surface and a lower surface of the piston ring not to go through from one surface to the other.

3. A piston ring of claim 2 wherein said plurality of cuts are tilted with respect to an axis at a center of the piston ring.

4. A piston ring of claim 3 wherein said plurality of cuts are formed circumferentially in each of the upper surface and the lower surface, said plurality of cuts in the upper surface being alternately arranged with respect to said plurality of cuts in the lower surface.

5. A piston ring of claim 2 wherein said plurality of cuts are formed in a surface which becomes an outer circumferential surface of the piston ring when the piston ring is turned inside up.

6. A piston ring of claim 4 wherein said plurality of cuts in the upper surface is tilted in an opposite direction to said plurality of cuts in the lower surface.

7. A piston ring made of high polymers, an internal diameter of the piston ring being capable of increasing when the piston ring is pulled out radially.

8. A piston ring of claim 7 wherein a plurality of cuts are formed circumferentially in at least one of an inner circumferential surface and an outer circumferential surface of the piston ring not to go through from one surface to the other.

9. A piston ring of claim 7 wherein a plurality of cuts are formed circumferentially in at least one of an upper surface and a lower surface of the piston ring to go through from one surface to the other.

10. A piston ring of claim 8 wherein said plurality of cuts are tilted with respect to an axis at a center of the piston ring.

11. A piston ring of claim 8 wherein when said plurality of cuts are enlarged, they are filled with a filler.

12. A fluid sucking/discharge device with the piston ring according to claim 1 or 7.
